(19) Europäisches Patentamt
European Patent Office
Office européen des brevets

(11) EP 3 818 477 B1

(12) EUROPEAN PATENT SPECIFICATION

(45) Date of publication and mention of the grant of the patent:
**30.10.2024 Bulletin 2024/44**

(21) Application number: **19768888.0**

(22) Date of filing: **04.07.2019**

(51) International Patent Classification (IPC):
**G06N 10/40** *(2022.01)*        **G06N 10/60** *(2022.01)*

(52) Cooperative Patent Classification (CPC):
**G06N 10/40; G06N 10/60**

(86) International application number:
**PCT/IB2019/055719**

(87) International publication number:
**WO 2020/008409 (09.01.2020 Gazette 2020/02)**

(54) **A METHOD OF PERFORMING QUANTUM FOURIER-KRAVCHUK TRANSFORM (QKT) AND A DEVICE CONFIGURED TO IMPLEMENT SAID METHOD**

VERFAHREN ZUR DURCHFÜHRUNG EINER QUANTENFOURIER-KRAVCHUK-TRANSFORMATION (QKT) UND VORRICHTUNG ZUR DURCHFÜHRUNG DES VERFAHRENS

PROCÉDÉ DE RÉALISATION D'UNE TRANSFORMÉE DE FOURIER-KRAVCHUK (QKT) ET DISPOSITIF CONFIGURÉ POUR METTRE EN     OEUVRE LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2018 PL 42622818**

(43) Date of publication of application:
**12.05.2021 Bulletin 2021/19**

(73) Proprietors:
• **Uniwersytet Warszawski**
  **00-927 Warszawa (PL)**
• **The Chancellor, Masters and Scholars of The University of Oxford**
  **Oxford OX1 2JD (GB)**

(72) Inventors:
• **STOBINSKA, Magdalena**
  **03-337 Warszawa (PL)**
• **BURACZEWSKI, Adam**
  **02-795 Warszawa (PL)**
• **WALMSLEY, Ian**
  **Oxford Oxfordshire OX3 0BU (GB)**

(74) Representative: **AOMB Polska Sp. z.o.o.**
  **ul. Rondo Ignacego Daszynskiego 1**
  **00-843 Warsaw (PL)**

(56) References cited:
• **STEFFEN WEIMANN ET AL: "Implementation of quantum and classical discrete fractional Fourier transforms", NATURE COMMUNICATIONS, vol. 7, no. 1, 23 May 2016 (2016-05-23), XP055650824, DOI: 10.1038/ncomms11027**
• **RONEN BARAK ET AL: "Quantum fast Fourier transform and quantum computation by linear optics", JOURNAL OF THE OPTICAL SOCIETY OF AMERICA - B., vol. 24, no. 2, February 2007 (2007-02-01), US, pages 231, XP055652296, ISSN: 0740-3224, DOI: 10.1364/JOSAB.24.000231**
• **ANDREA CRESPI ET AL: "Suppression law of quantum states in a 3D photonic fast Fourier transform chip", NATURE COMMUNICATIONS, vol. 7, no. 1, 4 February 2016 (2016-02-04), XP055650839, DOI: 10.1038/ncomms10469**
• **NATIG M. ATAKISHIYEV ET AL: "Fractional Fourier-Kravchuk transform", JOURNAL OF THE OPTICAL SOCIETY OF AMERICA A, vol. 14, no. 7, July 1997 (1997-07-01), US, pages 1467, XP055650769, ISSN: 1084-7529, DOI: 10.1364/JOSAA.14.001467**
• **STOBINSKA ET AL: "Quantum interference enables constant-time quantum information processing", ARXIV.ORG, CORNELL UNIVERSITY LIBRARY, 201 OLIN LIBRARY CORNELL UNIVERSITY ITHACA, NY 14853, 11 July 2018 (2018-07-11), XP081247023**

**Description**

The invention relates to a method of performing constant-time quantum Fourier-Kravchuk transform (QKT) realized with a single quantum gate, where the input and output data is encoded in quantum amplitudes of a *d*-level quantum state, also known as qudit. STEFFEN WEIMANN ET AL: "Implementation of quantum and classical discrete fractional Fourier transforms",NATURE COMMUNICATIONS, vol. 7, no. 1, 23 May 2016 (2016-05-23), XP055650824,DOI: 10.1038/ncomms11027 reports on classical and quantum optical realizations of the discrete fractional Fourier transform.

Signal extraction, compression and analysis in diagnostics, astronomy, chemistry and digital broadcasting often builds on effective implementation of the discrete Fourier transform (DFT). It converts data, a function of e.g. frequency, into their constituent temporal or spatial parts. The DFT is an efficient approximation to the Fourier transform (FT). The signal $(x_0, x_1, ..., x_S)$ is taken to be samples of one period of a continuous function, and is turned into a new sequence $(X_0, X_1, ..., X_S)$ where

$$X_k = \frac{1}{\sqrt{S+1}} \sum_{l=0}^{S} e^{-i2\pi\frac{kl}{S+1}} \cdot x_l, \quad k = 0, ..., S. \qquad (1)$$

The DFT does not, however, reproduce all essential features of the FT. A transform which is a fractional power of the FT, the $\alpha$-fractional FT where $0 \leq \alpha \leq 1$, yields advantages. For $\alpha = 0$ this transform is the identity, while for $\alpha = 1$ this is the FT. The $\alpha$-fractional DFT defined as the $\alpha$ power of (1) does not correspond to the $\alpha$-fractional FT.

The DFT is powerful due to the fast Fourier transform algorithm (FFT). Using an FFT lowers the number of operations from $O(2^{2n})$ to $O(n2^n)$ which nevertheless remains a bottleneck in signal processing. The FFT employs a "divide and conquer" method to recursively split Eq. (1) into $2^n$ sums which can be processed quickly and therefore, is applicable to signals of period $2^n$. Notably, the minimal number of operations required to implement the DFT is unknown. The quantum Fourier transform (QFT), the cornerstone of quantum algorithms, enables to implement the DFT on quantum amplitudes with O($n$ log $n$) operations by processing $n$ qubits ($n$ quantum bits encode $2^n$ amplitudes).

In many applications, e.g. in bioimaging, the signals are typically not periodic and are random in length. For such cases, the Kravchuk transform (KT) is a useful alternative to the FFT because it can be applied to finite signal processing.

The KT computes orthogonal moments corresponding to the Kravchuk polynomials, which are discrete and orthogonal with respect to a binomial distribution in the data space. By varying a parameter of the binomial distribution, related to the fractionality of the KT, the transform can extract local features from a region of interest.

The KT's computational time is equal to the DFT's runtime and implementations with lower number of operations are of high demand. Recently, quantum KTs (QKTs) have been realized in waveguides with two photons, but they are difficult to scale up and their fractionality is fixed by waveguide length.

The $\alpha$-fractional KT employs the weighted Kravchuk polynomials $\phi_k^{(p)}(q, S)$ which are real-valued and correspond to wave functions of finite harmonic oscillators

$$X_k = \sum_{l=0}^{S} e^{-i\frac{\pi\alpha}{2}\frac{S}{2}} e^{i\frac{\pi}{2}(l-k)} \phi_k^{(p)}(l - Sp, S) \cdot x_l, \quad k = 0, ..., S, \qquad (2)$$

where $p = \sin^2\left(\frac{\pi\alpha}{4}\right)$. Unlike plane waves, $e^{-i2\pi\frac{kl}{S+1}}$, the polynomials are defined and orthogonal on a set of 5 + 1 points. This enables one to transform the signal as a finite sequence rather than as an infinite periodic one. In the limit of $S \to \infty$, $\phi_k^{(p)}(q, S)$ tend to eigenfunctions of quantum harmonic oscillators and the $\alpha$-fractional KT reproduces the $\alpha$-fractional FT. Eq. (2) can be viewed in terms of overlaps of two spin S/2 states, in which they are prepared as

eigenstates of $S_3$ and one undergoes a rotation by angle $\dfrac{\pi\alpha}{2}$ generated by $S_1$,

$$e^{i\frac{\pi}{2}(l-k)}\phi_k^{(p)}(l - Sp, S) = \left\langle \frac{S}{2}, \frac{S}{2} - k \left| e^{i\frac{\pi\alpha}{2}S_1} \right| \frac{S}{2}, \frac{S}{2} - l \right\rangle. \qquad (3)$$

The present invention builds on the discovery that physical systems realizing the Hong-Ou-Mandel (HOM) quantum interference can be used to calculate the quantum fractional Fourier-Kravchuk transform with a single quantum gate. Moreover, each quantum system described by the same Hamiltonian can be used as a device computing this transform. In addition, the strength of the implemented exchange interaction corresponds to the fractionality of the Kravchuk transform, e.g. for a quantum gate made of a beam splitter (BS) $\alpha = \dfrac{2\theta}{\pi}, \; \theta = \arcsin\sqrt{r}$, where r is the splitting ratio (reflectivity).

The object of the present invention is a method of performing a fractional quantum Fourier-Kravchuk transform (QKT), characterised in that input data sequence is encoded in quantum amplitudes of a *d*-level (qudit) state which is processed by a quantum gate implementing an exchange interaction, and the result is read out by means of quantum detectors located downstream the single quantum gate, wherein the single quantum gate fulfils all the following prerequisites:

- the interaction of two independent modes *a* and *b* in the quantum gate is governed by the following Hamiltonian

$$H = H_0 + H_I,$$

wherein $H_0$ is the free quantum oscillator energy and $H_I$ - the interaction Hamiltonian

$$H_0 = \frac{\hbar}{2}(a^\dagger a + b^\dagger b),$$

$$H_I = \frac{i\hbar}{2}(g a^\dagger b - g^* a b^\dagger),$$

where *g* corresponds to the exchange interaction strength and *g\** is its complex conjugate,
- the evolution operator generated by the Hamiltonian *H* is the following

$$U = \exp\{-i\theta H/\hbar\},$$

where $\theta$ is an evolution parameter, e.g. time,
- the quantum input state $|\Psi\rangle = \sum_{l=0}^{S} x_l |l, S - l\rangle$ encodes the sequence to be transformed $(x_0, x_1, ..., x_S)$.

In this case, the exchange interaction followed by particle-counting detection implements the $\alpha$-fractional QKT transform of the input probability amplitudes

$$(x_0, x_1, ..., x_S) \rightarrow (|X_0|^2, |X_1|^2, ..., |X_S|^2)$$

where $\alpha = \dfrac{2|g|\theta}{\pi}$ and $|X_k|^2$ are experimentally determined particle number statistics for $k = 0, ..., S$ which correspond to

$$X_k = \sum_{l=0}^{S} e^{-i\frac{\pi\alpha}{2}\frac{S}{2}} e^{i\frac{\pi}{2}(l-k)} \phi_k^{(p)}(l - Sp, S) \cdot x_l, \quad k = 0, \dots, S$$

where $p = \sin^2\frac{\pi\alpha}{4}$ .

According to the invention, the quantum gate is implemented by a beam splitter and the input data are encoded as superposition of multiphoton Fock states that interfere on the beam splitter with the beam splitting ratio $r$, and the result is read from the system by means of photon counting detectors, wherein $g = -i$ ($|g| = 1$) ; whereby the $\alpha$-fractional

$$\alpha = \frac{2}{\pi}\arcsin\sqrt{r}$$

QKT transform is performed where the fractionality is expressed by the formula .

Preferably the strength of an exchange interaction $g$ can be adjusted, for example by a variable exchange interaction device (quantum gate).

Preferably the beam splitter is a variable ratio beam splitter.

Counting detectors can be superconducting Transition Edge Sensors (TESs).

The invention relates also to a device, in particular a quantum computer, configured to implement the method according to the invention.

Realization of the fractional QKT with qudit systems opens a new prospect for transformation of large data sequences in $O(1)$ time. This is not possible with the implementations based on waveguides. Both cases are examples of a non-universal quantum computer optimized for one task which is the basis for a variety of important applications. The photonic proof of concept is currently limited by the range of input states that can be prepared. However, deterministic creation of an arbitrary superposition of Fock states has been demonstrated for trapped ions and superconducting resonators. Since a BS sees orthogonal spectral or polarization modes independently, one can extend the transform to higher dimensions.

**Brief description of figures**

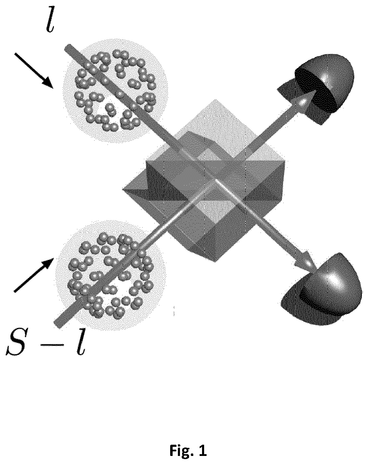

Fig. 1- Photonic implementation of a fractional QKT - HOM interference of photon number states on a variable beam splitter followed by two photon counting detectors,

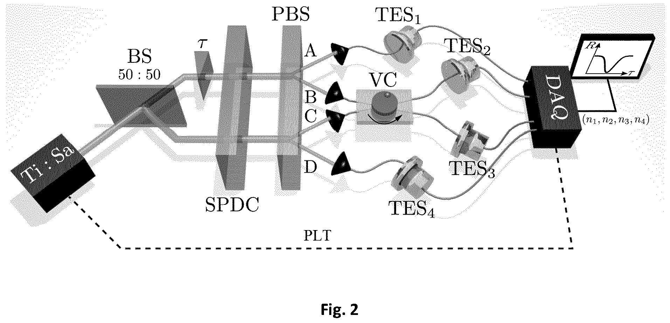

Fig. 2 - Setup: Ti:Sa - titanium-sapphire laser pump, BS - 50 : 50 beam splitter, $\tau$ - optical phase delay, SPDC - periodically-poled potassium titanyl phosphate (PP-KTP) nonlinear spontaneous parametric down conversion waveguide chip which produces photon number correlated states, PBS - polarization beam splitter, VC - variable coupler, TES - transition edge sensors, DAQ - data acquisition unit.

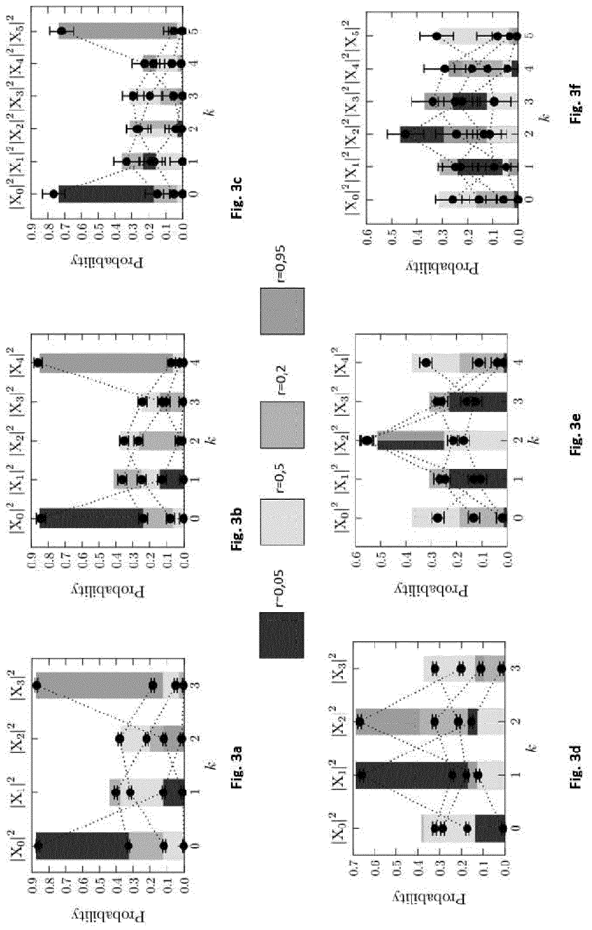

Fig. 3 - Photon number statistics resulting from Fock state $|l, S - l\rangle$ interference. The probabilities of detecting $|k\rangle$ and $|S - k\rangle$ photons behind the BS for input a) $|0,3\rangle$, b) $|0,4\rangle$, c) $|0,5\rangle$, d) $|1,2\rangle$, e) $|2,2\rangle$, f) $|2,3\rangle$. The BS reflectivities are r = 0.05, 0.2, 0.5 and 0.95. Vertical bars represent theoretical values for an ideal system, while dots are values determined in experiment. The states a)-c) encode sequences ($x_0 = 1, x_1 = 0,\dots,x_S = 0$), and in d) - (0,1,0,0), c) - (0,0,1,0,0), f) - (0,0,1,0,0,0), respectively. The measured probabilities set their QKTs ($|X_0|^2, |X_1|^2,\dots, |X_S|^2$) of fractionality $\alpha$ = 0.28, 0.60, 1.00 and 1.72.

**Example**

As an example, a single-step QKT with tunable fractionality using quantum effects, based on multi-particle bosonic interference resulting from an exchange interaction was demonstrated. To this end, photon number states (light pulses with definite particle number) were interfered on a BS with an adjustable splitting ratio. This leads to a multi-particle HOM effect which was observed for states with up to five photons. This QKT implementation enables constant-time information processing for qudit data encoding which is set by the total number of interfering particles $S$, allowing up to $d = S + 1$ signal samples.

$$|l\rangle = \frac{\left(a^\dagger\right)^l}{\sqrt{l!}}|0\rangle \qquad |S-l\rangle = \frac{\left(b^\dagger\right)^{S-l}}{\sqrt{(S-l)!}}|0\rangle$$

Photon number (Fock) states and impinging on a BS exhibit a generalized HOM effect (Fig. 1). A BS interaction between two such inputs described by annihilation operators $a$ and $b$

$$U_{BI} = \exp\left\{\frac{\theta}{2}\left(a^\dagger b e^{-i\varphi} + a b^\dagger e^{i\varphi}\right)\right\}$$

is where $r = \sin^2 \frac{\theta}{2}$ is the BS reflectivity and $\varphi$ is the phase difference between the reflected and transmitted fields. Since $\varphi$ does not influence this experiments, $\varphi = \frac{\pi}{2}$ may be assumed for convenience. If the BS is balanced ($r = 0.5$), two photons at the input ports will leave through the same exit port. This is known as photon bunching. Similar effects hold for multiphoton number states. This is reflected in the probability

$$A_S^{(r)}(k,l) = e^{-i\theta\frac{S}{2}}\langle k, S-k | U_{BS} | l, S-l\rangle$$

amplitudes of detecting $|k\rangle$ and $|S\text{-}k\rangle$ behind the BS, . This is important

$$A_S^{(r)}(k,l) = e^{-i\theta\frac{S}{2}} e^{i\frac{\pi}{2}(l-k)} \phi_k^{(r)}(l - Sr, S)$$

for implementing the KT, since ; thus, if we send a quantum state

$$|\Psi\rangle = \sum_{l=0}^{S} x_l |l, S-l\rangle$$

into the BS, the probability of measuring $k$ and $S$ - $k$ photons behind is the absolute square

$$|X_k|^2 = \left|\sum_{l=0}^{S} A_S^{(r)}(k,l)\, x_l\right|^2$$

of a $\frac{2\theta}{\pi}$ -fractional QKT of the input probability amplitudes, . Since two-mode optical interference can be achieved in a single step, regardless of the number of photons involved, this process implements a constant time QKT.

The experimental setup for multiphoton HOM interference is depicted in Fig. 2. Two pulsed spontaneous parametric down-conversion (SPDC) sources each generate two-mode photon-number correlated states (see Methods). The signal and idler are separated with a polarization BS (PBS) into four spatial modes. The modes $A$ and $D$ are used for heralding and creation of Fock states $|l\rangle$ in $\beta$ and $|S\text{-}l\rangle$ in $C$ which interfere in a variable ratio fiber coupler (the BS). An optical path delay r in one of the pump beams ensures optimal temporal overlap at interference. Photon-number-resolved measurements are achieved using transition edge sensors (TESs) that was previously estimated to achieve over 90% efficiency.

The vacuum $|0\rangle$ ($l = 0$) with multiphoton Fock states $|S\rangle$ ($S$ - $l = S$) were interfered on a coupler with splitting ratios $r = 0.05$, $r = 0.2$, $r = 0.5$ and $r = 0.95$, and photon number statistics were measured. They are depicted in Figs. 3a-c for $S = 3, 4, 5$. The input states encode sequences ($x_0 = 1, x_1 = 0, ..., x_S = 0$), while the measured probabilities set

$$|X_k|^2 = \left|A_S^{(r)}(k,0)\right|^2$$

their QKTs: ($|X_0|^2, |X_1|^2, ..., |X_S|^2$), where . The reflectivities used correspond to fractionalities $\alpha = 0.28, 0.60, 1.00, 1.72$. Errors were estimated as a square root inverse of the number of measurements. The second-order interferometric visibility reached values between 71.4% and 98.6% for $S = 5$.

For the same values of $r$ photon number distribution resulting from interference of $|1,2\rangle$, $|2,2\rangle$ and $|2,3\rangle$ was measured. They are shown in Figs. 3d-f. The inputs encode (0, 1, 0, 0, 0, 0, 1, 0, 0), (0, 0, 1, 0, 0, 0), while

$$|X_k|^2 = \left|A_3^{(r)}(k,1)\right|^2, \ \left|A_4^{(r)}(k,2)\right|^2 \qquad \left|A_5^{(r)}(k,2)\right|^2$$

, and , respectively. The visibility was between 54.8% and 99.5% ($S = 5$).

Fig. 3 shows that the theoretical values computed for an ideal system (the bars) match the experimental results (the dots) well.

**Methods**

A light pulse from a Ti:Sapphire laser at 775 nm (FWHM of 2 nm; repetition rate of 75 kHz) pumps collinear type-II phase-matched 8 mm-long SPDC waveguides written in a periodically poled KTP (PP-KTP) crystal sample provided by AdvR Inc. They generate two independent photon-number correlated states - the two-mode squeezed vacua

$|\Psi\rangle = \sum_{n=0}^{\infty} \lambda_n |n, n\rangle$ , where $\lambda_n = \frac{\tanh^n g}{\cosh g}$ is a probability amplitude for creation of a pair of $n$ photons and $g$ is the parametric gain. The average photon number in the signal and idler mode equals $\langle \hat{n} \rangle = \sinh^2 g$. For small $g$, $\cosh g \approx 1$, and thus $\lambda_n^2 \approx \sinh^{2n} g = \langle \hat{n} \rangle^n$. In the experiment, the average photon number is $\langle \hat{n} \rangle \approx 0.2$. This value is sufficient to ensure the emission of multiphoton pairs, but at the same time to diminish the interferometric visibility of two-photon events. In both output states, the signal and idler pulses are split with a polarization beam-splitter (PBS) to four spatial modes $A$-$D$. Subsequently, they are filtered by Semrock bandpass filters with 3 nm FWHM angle-tuned to the central wavelength of their respective spectra, in order to reduce the broadband background typically generated in dielectric nonlinear waveguides. The pump beam is discarded with a Semrock edge filter. The modes $A$ and $D$ are used for heralding and conditional creation of Fock states in modes $B$ and $C$ which interfere in a variable ratio PM fiber coupler F-CPL-1550-P-FA by Newport. The heralding signal modes (H-pol.) are centered at 1554 nm, while the interfering idler modes (Vpol.) are at 1546 nm. Transition-edge sensors (TES) running at 70 mK which allow for photon-number resolved measurements in all modes was employed. Their voltage output is captured with an AlazarTech ATS9440 ADC card was employed.

Before demonstrating the HOM interference, the setup was characterized. A high photon number resolution and single-mode input states are pivotal for this experiment. The resolution was estimated to be 95%. The depth of the HOM dip of 85.9% $\pm$ 0.3% for a two-photon interference indicates an effective Schmidt mode number $K$ = 1.16. For the measured 4-tuples of photon numbers losses were computed by assuming perfect setup components, each followed by a beam splitter with a reflection coefficient introducing the loss. The total transmission in each mode was estimated to be 50%.

Measurements for individual settings of the splitting ratio were taken over ca. 400 seconds, giving $10^9$ data samples for each $r$ ranging from 0 to 1 with a step of ca. 3%. Small error bars for low photon numbers and larger bars for the higher ones result from keeping the pump power fixed and near-single-modeness of the interfering beams.

## Claims

1. A method of performing a constant-time fractional quantum Fourier-Kravchuk transform (QKT), **characterised in that** input data sequence is encoded in quantum amplitudes of a $d$-level state, which is processed by a single quantum gate implementing an exchange interaction, and the result is read out by means of quantum detectors located downstream the quantum gate, wherein the single quantum gate fulfils all the following prerequisites:

   • the interaction of two independent modes $a$ and b in the quantum gate is governed by the following Hamiltonian

   $$H = H_0 + H_I,$$

   wherein

   $H_0$ is the free quantum oscillator energy and
   $H_I$ -the interaction Hamiltonian

   $$H_0 = \frac{\hbar}{2}(a^\dagger a + b^\dagger b),$$

   $$H_I = \frac{i\hbar}{2}(g a^\dagger b - g^* a b^\dagger),$$

   where

   $g$ corresponds to the exchange interaction strength and
   $g^*$ is its complex conjugate,

   • the evolution operator generated by the Hamiltonian $H$ is the following

$$U = \exp\{-i\theta H/\hbar\},$$

where $\theta$ is an evolution parameter,

$$|\Psi\rangle = \sum_{l=0}^{S} x_l \, |l, S - l\rangle$$

• the quantum input state encodes the sequence to be transformed $(x_0, x_1, ..., x_S)$;

wherein the exchange interaction followed by particle-counting detection implements the $\alpha$-fractional QKT transform of the input probability amplitudes

$$(x_0, x_1, ..., x_S) \rightarrow (|X_0|^2, |X_1|^2, ..., |X_S|^2)$$

where $\alpha = \dfrac{2|g|\theta}{\pi}$ and $|X_k|^2$ are particle number statistics measured downstream the quantum gate for $k = 0, ..., S$ which correspond to

$$X_k = \sum_{l=0}^{S} e^{-i\frac{\pi\alpha}{2}\frac{S}{2}} e^{i\frac{\pi}{2}(l-k)} \, \phi_k^{(p)}(l - Sp, S) \cdot x_l, \quad k = 0, ..., S$$

where

$$p = \sin^2 \frac{\pi\alpha}{4},$$

• the quantum gate is implemented by a beam splitter and the input data are encoded as superposition of multiphoton Fock states that interfere on the beam splitter with the beam splitting ratio r, and the result is read from the system by means of photon counting detectors, wherein $g = -i$ ($|g| = 1$) ; whereby the $\alpha$-fractional QKT transform is performed where the fractionality is expressed by the formula $\alpha = \dfrac{2}{\pi} \arcsin \sqrt{r}$ .

2. The method according to claim 1, wherein the strength of the exchange interaction $g$ can be adjusted by the quantum gate which is implemented by a variable interaction exchange device.

3. The method according to claim 1, wherein the beam splitter is a variable ratio beam splitter.

4. The method according to claim 1 or 3, wherein counting detectors are superconducting Transition Edge Sensors (TESs).

**Patentansprüche**

1. Ein Verfahren zur Durchführung einer zeitkonstanten fraktionalen Quanten-Fourier-Kravchuktransformation (QKT), **dadurch gekennzeichnet, dass** die Eingangsdatensequenz in Quantenamplituden eines d-Level-Zustands codiert wird, der durch ein einzelnes Quantengatter verarbeitet wird, das eine Austauschwechselwirkung implementiert, und das Ergebnis mittels Quantendetektoren ausgelesen wird, die sich stromabwärts des Quantengatters befinden, wobei das einzelne Quantengatter alle folgenden Voraussetzungen erfüllt:

   • die Wechselwirkung zweier unabhängiger Moden *a* und *b* im Quantengatter wird durch den folgenden Hamilton-Operator bestimmt

$$H = H_0 + H_I,$$

wobei

H$_0$ die freie Quantenoszillatorenergie und
H$_I$ - der Wechselwirkungs-Hamilton-Operator ist

$$H_0 = \frac{\hbar}{2}(a^\dagger a + b^\dagger b),$$

$$H_I = \frac{i\hbar}{2}(g a^\dagger b - g^* a b^\dagger),$$

wobei

*g* der Stärke der Austauschwechselwirkung entspricht und
*g** ist dessen komplexes Konjugat,

• der durch den Hamilton-Operator *H* erzeugte Evolutionsoperator ist der folgende

$$U = \exp\{-i\theta H/\hbar\},$$

wobei $\theta$ ein Evolutionsparameter ist,

$$|\Psi\rangle = \sum_{l=0}^{S} x_l \,|l, S-l\rangle$$

• der Quanten-Eingangszustand                    die zu transformierende Sequenz (x$_0$,x$_1$,...,x$_s$) codiert;

wobei die Austauschwechselwirkung, gefolgt von einer Teilchenzählungsdetektion, die α-fraktionierte QKT-Transformation der Eingangswahrscheinlichkeitsamplituden implementiert

$$(x_0, x_1, \ldots, x_S) \rightarrow (|X_0|^2, |X_1|^2, \ldots, |X_S|^2)$$

wobei $\alpha = \frac{2|g|\theta}{\pi}$ und |X$_k$|$^2$ Teilchenzahlstatistiken sind, die stromabwärts des Quantengatters für *k* = 0, ...,*S* gemessen werden, die dem entsprechen

$$X_k = \sum_{l=0}^{S} e^{-i\frac{\pi\alpha}{2}\frac{S}{2}} e^{i\frac{\pi}{2}(l-k)} \phi_k^{(p)}(l-Sp, S) \cdot x_l, \quad k = 0, \ldots, S$$

wo

$$p = \sin^2\frac{\pi\alpha}{4},$$

• das Quantengatter durch einen Strahlteiler implementiert wird und die Eingabedaten als Überlagerung von Multiphotonen-Fock-Zuständen codiert werden, die auf dem Strahlteiler mit dem Strahlteilungsverhältnis r interferieren, und das Ergebnis aus dem System mittels Photonenzählungsdetektoren ausgelesen wird, wobei *g*

= -$i$ (|$g$| = 1) ; wobei die $\alpha$-fraktionale QKT-Transformation durchgeführt wird, wobei die Fraktionalität durch die

Formel $\alpha = \frac{2}{\pi}\arcsin\sqrt{r}$ ausgedrückt wird.

2. Das Verfahren nach Anspruch 1, wobei die Stärke der Austauschwechselwirkung $g$ durch das Quantengatter eingestellt werden kann, das durch ein variables Austauschwechselwirkungsgerät implementiert wird.

3. Das Verfahren nach Anspruch 1, wobei der Strahlteiler ein Strahlteiler mit variablem Verhältnis ist.

4. Das Verfahren nach Anspruch 1 oder 3, wobei die Zähldetektoren supraleitende Übergang-Kantensensoren (TESs) sind.

**Revendications**

1. Un procédé pour effectuer une transformée de Fourier-Kravchuk quantique fractionnaire à temps constant (QKT), **caractérisé en ce que** la séquence de données d'entrée est encodée dans les amplitudes quantiques d'un état de niveau d, qui est traité par une porte quantique unique mettant en oeuvre une interaction d'échange, et le résultat est lu au moyen de détecteurs quantiques situés en aval de la porte quantique, dans lequel la porte quantique unique remplit toutes les conditions préalables suivantes :

   • l'interaction de deux modes indépendants a et b dans la porte quantique est régie par l'hamiltonien suivant

$$H = H_0 + H_I,$$

   dans lequel

   $H_0$ est l'énergie libre de l'oscillateur quantique et
   $H_I$ - l'hamiltonien d'interaction

$$H_0 = \frac{\hbar}{2}(a^\dagger a + b^\dagger b),$$

$$H_I = \frac{i\hbar}{2}(ga^\dagger b - g^* ab^\dagger),$$

   où

   $g$ correspond à l'intensité de l'interaction d'échange et
   $g^*$ est son conjugué complexe,

   • l'opérateur d'évolution généré par l'hamiltonien H est le suivant

$$U = \exp\{-i\theta H/\hbar\},$$

   où $\theta$ est un paramètre d'évolution,

   • l'état quantique d'entrée $|\Psi\rangle = \sum_{l=0}^{S} x_l |l, S - l\rangle$ code la séquence à transformer $(x_0, x_1, ..., x_s)$ ;

   dans lequel l'interaction d'échange suivie d'une détection par comptage de particules met en oeuvre la transformée QKT $\alpha$-fractionnelle des amplitudes de probabilité d'entrée

$$(x_0, x_1, \ldots, x_S) \rightarrow (|X_0|^2, |X_1|^2, \ldots, |X_S|^2)$$

où $\alpha = \dfrac{2|g|\theta}{\pi}$ et $|X_k|^2$ sont des statistiques sur le nombre de particules mesurées en aval de l'appareil de la porte quantique pour k = 0, ...,S qui correspondent à

$$X_k = \sum_{l=0}^{S} e^{-i\frac{\pi\alpha}{2}\frac{S}{2}} e^{i\frac{\pi}{2}(l-k)} \phi_k^{(p)}(l - Sp, S) \cdot x_l, \quad k = 0, \ldots, S$$

où

$$p = \sin^2 \frac{\pi\alpha}{4},$$

- la porte quantique est mise en oeuvre par un séparateur de faisceau et les données d'entrée sont codées sous forme de superposition d'états de Fock multiphotonique qui interfèrent sur le séparateur de faisceau avec le rapport de séparation de faisceau $r$, et le résultat est lu dans le système au moyen de détecteurs de comptage de photons, dans lequel $g$ = -$i$ ($|g|$ = 1) ; la transformée QKT $\alpha$-fractionnelle est réalisée lorsque la fractionnalité est exprimée par la formule $\alpha = \dfrac{2}{\pi} \arcsin \sqrt{r}$ .

2. Le procédé selon la revendication 1, dans lequel l'intensité de l'interaction d'échange $g$ peut être ajustée par la porte quantique qui est mise en oeuvre par un dispositif d'échange à interaction variable.

3. Le procédé selon la revendication 1, dans lequel le séparateur de faisceau est un séparateur de faisceau à rapport variable.

4. Le procédé selon la revendication 1 ou 3, dans lequel les détecteurs de comptage sont des capteurs de bord de transition supraconducteurs (TES).

**Fig. 1**

**Fig. 2**

Fig. 3a

Fig. 3b

Fig. 3c

r=0,05          r=0,5          r=0,2          r=0,95

Fig. 3d

Fig. 3e

Fig. 3f

EP 3 818 477 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **STEFFEN WEIMANN et al.** Implementation of quantum and classical discrete fractional Fourier transforms. *NATURE COMMUNICATIONS,* 23 May 2016, vol. 7 (1